# EUROPEAN PATENT SPECIFICATION

(11) **EP 0 449 479 B1**
(45) Date of publication and mention of the grant of the patent: **27.07.1994**
(21) Application number: 91302320.6
(22) Date of filing: 18.03.1991
(51) Int. Cl.: G21C 21/04, G01F 13/00, B01F 3/18

(54) **Blending and loading apparatus for constituents of varying densities**
Misch- und Füllvorrichtung für Stoffe unterschiedlicher Dichten
Dispositif mélangeur et de chargement de marériaux de densités différentes

(30) Priority: 22.03.1990 US 497173
(43) Date of publication of application: 02.10.1991
(73) Proprietor: THE BABCOCK & WILCOX COMPANY, New Orleans, Louisiana 70160 (US)
(72) Inventor: Artman, Thomas Alan, Lynchburg, Virginia 24502 (US); Jones, Gary Lance, Lynchburg, Virginia 24504 (US); Zartman, Steven Nelson, Lynchburg, Virginia 24502-5635 (US); Allcock, Carroll Eric, Rustburg, Virginia 24588 (US); Garner, Garry Lee, Forest, Virginia 24551 (US); Larsen, William Richard, Sterling, Illinois 61801 (US)
(74) Representative: Purvis, William Michael Cameron

(56) References cited:
- EP-A- 0 081 378
- EP-A- 0 081 379
- GB-A- 743 424
- US-A- 3 901 409
- US-A- 3 926 344

## Description

The invention relates to a blending and loading apparatus for constituents of varying densities and has particular but not exclusive application to the loading of nuclear fuel rods with uniform diameter nuclear fuel.

Today there exist various devices for blending powders and granulates of comparable densities. Commercially available devices are the V-blender, the turbula shaker-mixer, and the motionless blender. Patent Specifications EP-A-0081378 (US-A-4 495 145) and EP-A-0081379 (US-A-4 495 146) disclose additional systems for blending materials having the same density but different diameters.

In the alternative, blending material with varying density but having the same diameter is not so easily accomplished. This is because achieving a homogeneous blend and transferring the blend to its final destination present unique problems that must be resolved. These factors gain increased significance whenever the blended material is nuclear fuel.

According to the invention there is provided a blending and loading apparatus for homogeneously loading constituents of varying densities comprising:
a) a vertically elongate cylinder having a top opening through which the constituents are to be loaded into the cylinder;
b) a turntable supporting the cylinder and rotatable to rotate the cylinder about its vertical axis;
c) a plurality of hoppers supported above the top opening, each of the hoppers being configured to store a uniform diameter constituent therein;
d) a respective transfer conduit secured to each of the hoppers separately to transfer the respective stored constituent to the cylinder, a lower portion of each transfer conduit being configured to fit through the top opening and extend into the cylinder;
e) nozzle means secured to the transfer conduit independently to control the flow of the respective constituent through the respective transfer conduit into the cylinder;
f) raising/lowering means to vary the elevation of the transfer conduit with respect to the cylinder;
g) alignment means vertically to align the cylinder with respect to the vertically movable transfer conduit; and
h) operating means to rotate the cylinder about its vertical axis and simultaneously raise lower portions of the transfer conduits while also homogeneously discharging constituents from the hoppers through the transfer conduits and into the cylinder.

Such an apparatus can provide a homogeneous blend for constituents of varying density but having a uniform diameter and can provide control over the blending ratio of the different fuels involved should such be desired.

The invention is diagrammatically illustrated by way of example in the accompanying drawings, in which:-
Figure 1 is a pictorial view of a blending and loading apparatus according to the invention;
Figure 2 is a side view of a loading assembly of the blending means of Figure 1;
Figure 3 is a top view, partially broken away of the loading assembly of Figure 2;
Figure 4 is an enlarged view of a dispersing nozzle of the blending means of Figure 1;
Figure 5 is an enlarged view, partially broken away, of the nozzle of Figure 4; and
Figure 6 is an enlarged view, partially broken away, of the nozzle of Figures 4 and 5 in operation.

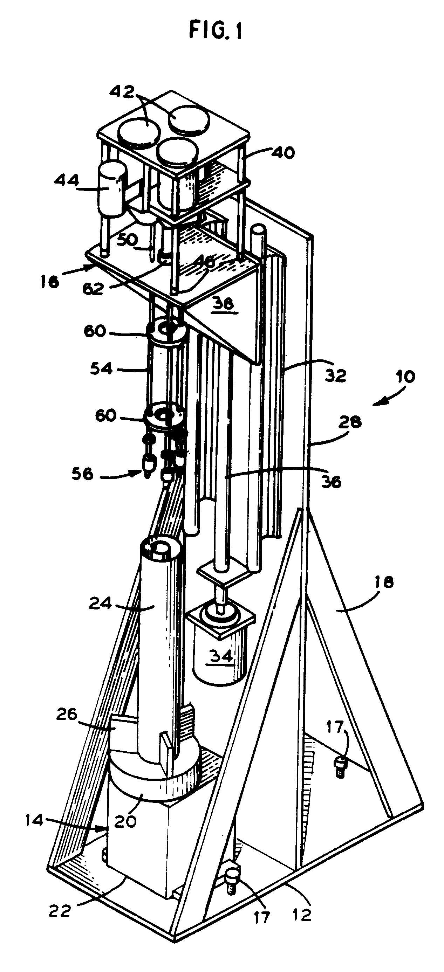

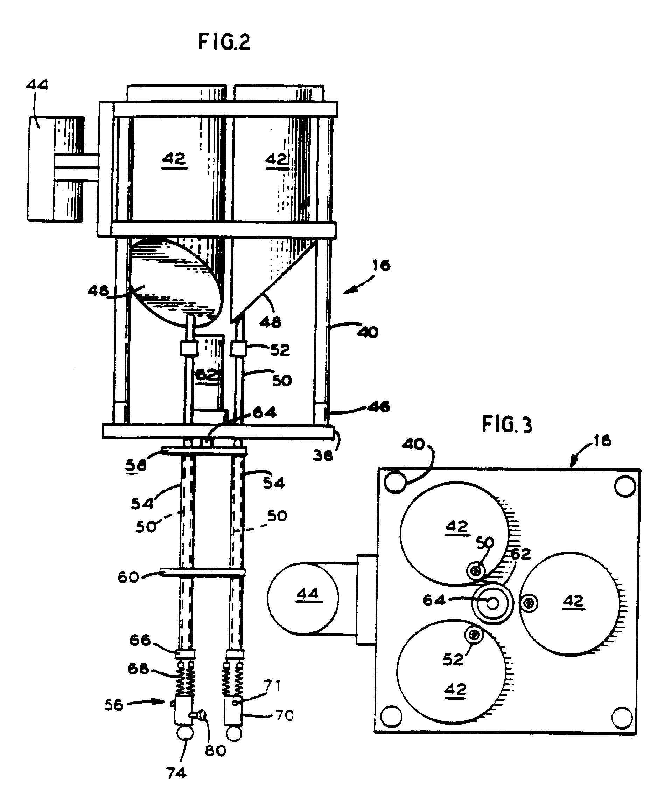

Referring initially to Figure 1, there is shown a blending and loading apparatus 10 comprising an inverted T-frame 12, a turntable assembly 14 and a loading assembly 16. The T-frame 12 is supported on a floor by three levelling screws 17 to level the top of the loading assembly 16. Bracing 18 is utilized to make the T-frame 12 a rigid structure.

The turntable assembly 14 is secured to the base of the T-frame 12 and comprises a turntable 20 that is powered by a motor 22 in order to rotate a blend container 24 about a vertical axis. The top of the turntable 20 is configured with three self-centering jaws 26 that align and support the container 24 while it is being rotated about its longitudinal axis. The jaws 26 also prevent the container 24 from sliding off the turntable 20 during its rotation.

Above the turntable assembly 14 the loading assembly 16 is secured to an upright member 28 of the inverted T-frame 12. The loading assembly 16 is vertically movable along two parallel slide rails 32 which are affixed to the upright member 28. A motor 34, also secured to the upright member 28, is sized to move the loading assembly 16 along the rails 32 via a ball screw 36. Other mechanisms are equally suitable so long as the change in elevation of the loading assembly 16 with respect to the turntable assembly 14 is controllable.

A platform 38, which is moved along the rails 32, supports a frame 40 directly above the blend container 24. The frame 40 is configured in this embodiment to support three hoppers 42, each separately containing different materials to be blended and loaded. It should be acknowledged that more or fewer hoppers could be accommodated. To aid in the uniform flow of the different constituents from the hoppers 42, a vibrator 44 is attached to the frame 40 to impart a horizontal vibration to the frame 40 and hence to the hoppers 42. Rubber isolators 46 are used to secure the frame 40 to the platform 38 to reduce the effect of the vibrator 44 on the other components of the blending system 10.

As can be seen in better detail in Figures 2 and 3, each of the hoppers 42 is identically configured to the others so as to contain similar amounts of similarly sized particles even though the particles will be of different densities. However, it should be noted that under normal circumstances, just as the density of the collected particles may vary, so may their size and the size of the hoppers 42. In this embodiment, however, each of the hoppers 42 has a uniform diameter of about 63.5mm (2.5 inches) and a height of about 203mm (8 inches) and holds about 500 cc of a particular constituent. Also, each of the hoppers 42 has a sloping bottom wall 48 that funnels the particles to a respective transfer tube 50. Each transfer tube 50 extends downward from its respective hopper 42 with a connector 52 coupling additional lengths of the transfer tube 50 as needed. The transfer tubes 50 all run parallel to the slide rails 32 and they are equally spaced to each other so that in this embodiment their lower end regions may all be lowered into the blend container 24. As shown, each transfer tube 50 extends through the platform 38 and continues downward through a respective sleeve or push tube 54 before terminating in a nozzle 56. The push tubes 54 which are rigidly secured to a circular plate 58 and to rings 60, maintain the vertical alignment of the three illustrated (more or less may actually be incorporated) transfer tubes 50.

Additionally, the push tubes 54 and the circular plate 58 are utilized to activate the nozzles 56. This is accomplished via an air cylinder 62 mounted on the platform 38 and connected to one end of a push rod 64. The other end of the push rod 64 (on the opposite side of the platform 38) is connected to the circular plate 58 secured to each of the push tubes 54. Consequently, the air cylinder 62 and the push rod 64 support or suspend the push tubes 54, the circular plate 58 and the rings 60 underneath the platform 38. In this fashion, as the air cylinder 62 is operated to extend the push rod 64, the push tubes, the circular plate and the ring assembly are moved downward with respect to the transfer tubes 50. This causes a contact collar 66 (on the opposite end of each push tube 54) to compress a respective spring 68 thereby opening the respective nozzle 56.

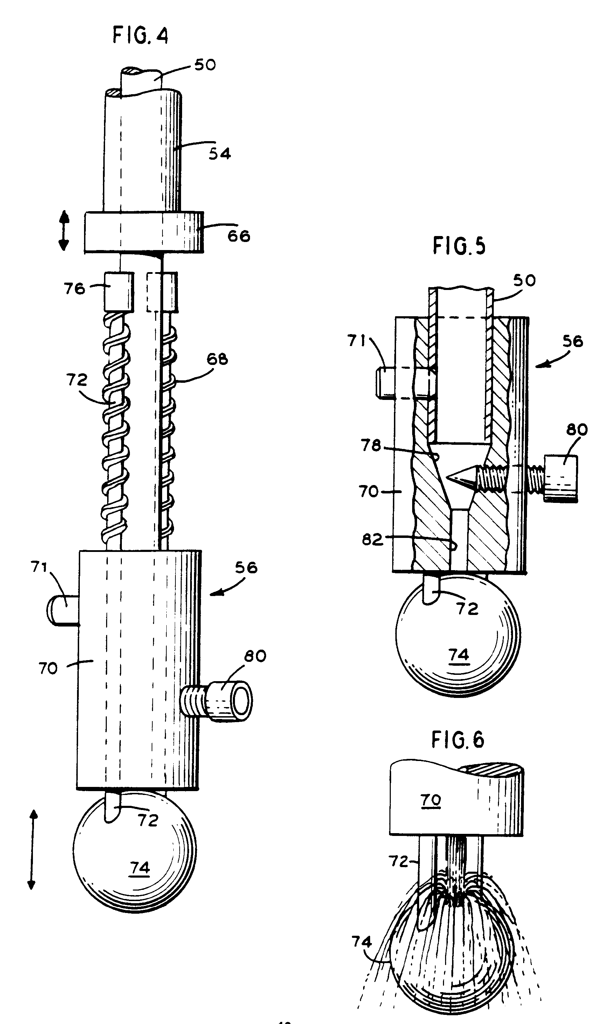

Referring now to Figure 4, each of the nozzles 56 is shown as comprising a thick-walled cylinder 70 secured to the end of each transfer tube 50 via a set screw 71. Ball support rods 72 extend through the walls of the cylinder 70 and are allowed to slide therein. The ball support rods 72 are secured to a ball 74 as shown which is sized to achieve the desired dispersion and to block or seal off a lower opening of the cylinder 70 thereby also blocking the flow through its respective transfer tube 50. Each spring 68 raises an opposite end 76 of the ball support rod 72 away from the nozzle 56 until no further upward movement is permitted due to the ball 74 engaging the lower end of the nozzle 56. This arrangement causes the ball 74 always to remain in the closed or sealed position until the force of the springs 68 is overcome.

Referring now to Figure 5, the converging flow path within each of the nozzles 56 is illustrated. The transfer tube 50, which is secured to the cylinder 70 via the set screw 71, terminates above a conical section 78. A flow regulator 80 is threaded into the conical section 78 as a means to control or regulate the flow out of the nozzle 56 via an exit channel 82. As shown, the ball 74 is sized to achieve the desired dispersion pattern and normally to block the exit channel 82.

During operation of the above described embodiment, the platform 38 is moved to the top of the rails 32 by the motor 34. Once sufficient clearance is achieved, a blend container 24 to be filled is placed between the jaws 26 on the turntable 20. The platform 38 is then lowered so that the nozzles 56 are initially positioned within the container 24 near the bottom thereof. Alternatively, the nozzles 56 could discharge into a continuation of the transfer tubes 50 which is sized to extend into the container 24. In any event, however, before beginning a discharge operation, the flow regulator 80 of each nozzle 56 is adjusted to achieve a predetermined flow rate which will result in a homogeneous blend of the desired consistency of ratio.

Once the nozzles 56 are lowered within the container 24, the motor 22 is activated to rotate the turntable 20 and hence the container 24, however, it should be noted that the rotational speed is not sufficiently great to induce radial movement of the particles. Subsequently, the air cylinder 62 is operated to lower the push rod 64 causing the contact collar 66 to engage the end 76 of each ball support rod 72 thereby moving them against the force of the springs 68. As the ball support rods 72 are depressed, the ball 74 is moved away from the exit channel 82 thereby allowing particles to flow into the container 24. Additionally, the ball 74 functions to distribute the material in an umbrella-like fashion resulting in a homogenously loaded bed. As discussed earlier, the vibrator 44 is activated to assist in the flow of the particles from the hoppers 42 through the transfer tubes 50.

Concurrently with the rotation of the blend container 24 and the discharge of the contents of the hoppers 42 into the container 24, the platform 38 continuously moves upwardly as the container 24 is filled. This upward movement, in conjunction with the rotation of the container 24, causes the nozzles 56 to discharge their contents in an even, controlled and spiralled manner thus imparting a homogeneous blend to the container 24. Additionally, the dispersing of the constituents amongst themselves, caused by the constituents deflecting off the curved surface of the ball 74 induces an even greater homogenous blend.

Once the desired depth of blend is achieved, the air cylinder 62 retracts the push rod 64 thereby releasing the springs 68 which once again cause the ball 74 to block the exit channel 82. The platform 38 is then raised as needed to provide sufficient clearance for the blend container 24 to be removed from the turntable 20.

The blend container 24 may be round, square, rectangular, or any other suitable shape so long as the nozzles 56 and the configuration of the transfer tubes 50 can be raised and lowered within the container 24 as it is being rotated (bearing in mind that rectangular containers require a translational motion). Also, the preferred blend comprises three materials having identically sized spherical particles; but because of their compositions, the particles will probably have different densities.

This invention has particular utility in the nuclear power industry because it can precisely load separate radioactive particulates into a fuel rod in accordance with a preferred mix or ratio. It can also minimize particle degradation caused by abrasive forces between the different constituents and increase the particle packing fraction without the need for "binders" since blending and loading are accomplished in the same operation. Also, because the constituents are kept separate prior to blending and loading, the possibility of unwanted constituent reactivity is minimized.

## Claims

1. Blending and loading apparatus (10) for homogeneously loading constituents of varying densities comprising:
a) a vertically elongate cylinder (24) having a top opening through which the constituents are to be loaded into the cylinder (24);
b) a turntable (20) supporting the cylinder (24) and rotatable to rotate the cylinder about its vertical axis;
c) a plurality of hoppers (42) supported above the top opening, each of the hoppers (42) being configured to store a uniform diameter constituent therein;
d) a respective transfer conduit (50) secured to each of the hoppers (42) separately to transfer the respective stored constituent to the cylinder (24), a lower portion of each transfer conduit (50) being configured to fit through the top opening and extend into the cylinder (24);
e) nozzle means (56) secured to the transfer conduit (50) independently to control the flow of the respective constituent through the respective transfer conduit (50) into the cylinder (24);
f) raising/lowering means (62, 64) to vary the elevation of the transfer conduit (50) with respect to the cylinder (24);
g) alignment means vertically to align the cylinder (24) with respect to the vertically movable transfer conduit (50); and
h) operating means (22) to rotate the cylinder about its vertical axis and simultaneously raise lower portions of the transfer conduits (50) while also homogeneously discharging constituents from the hoppers (42) through the transfer conduits (50) and into the cylinder (24).

2. Apparatus according to claim 1, including vibrating means (44) to vibrate the hoppers (42) to assist in the transfer of the constituent from each of the hoppers (42) through the respective transfer conduit (50) and into the cylinder (24).

3. Apparatus according to claim 2, wherein the raising/lowering means (62,64) comprise a vertically movable platform (38) supporting the transfer conduits (50), the elevation of the platform (38), and hence of the transfer conduit (50), being adjusted depending upon the depth of the constituents loaded into the cylinder (24).

4. Apparatus according to claim 3, wherein the nozzle means (56) comprise independent flow control means (80) adjustably to control the flow of one of the constituents from a respective one of the hoppers (42) into the cylinder (24).

5. Apparatus according to claim 4, wherein the nozzle means comprise a stop (74) to block the flow of the constituents into the cylinder.

6. Apparatus according to claim 5, wherein the stop (74) is normally biased to a closed position with the operating means overcoming the bias whenever flow into the cylinder is desired.

7. Apparatus according to claim 6, wherein the nozzle means (56) are secured to an end region of the respective transfer conduit (50) with the nozzle means configured to extend into the cylinder (24).

8. Apparatus according to claim 7, wherein the nozzle means (56) comprise a converging flow path (78) for the constituents, and the independent flow control means (80) project into the converging flow path.

9. Apparatus according to claim 8, wherein the stop comprises a curved surface (74) that is normally closed under spring (68) force.

10. Apparatus according to claim 9, wherein the curved surface (74) is configured randomly to deflect the constituents into a homogeneous mixture.

11. Apparatus according to claim 10, wherein there are three of the hoppers (42) and correspondingly three of the transfer conduits (50) and of the nozzles (56).

12. Apparatus according to claim 11, wherein the vertically elongate cylinder (24) is a fuel rod and the constituents are spherical radioactive powder or granules of generally uniform diameter but having different densities.

## Patentansprüche

1. Misch- und Füllvorrichtung (10) für das homogene Füllen von Bestandteilen unterschiedlicher Dichte, mit:
a) einem vertikal länglichen Zylinder (24), der eine obere Öffnung hat, durch welche die Bestandteile in den Zylinder (24) eingefüllt werden sollen,
b) einem Drehtisch (20), welcher den Zylinder (24) haltert und drehbar ist, um den Zylinder um seine vertikale Achse zu drehen,
c) eine Mehrzahl von Silos bzw. Vorratsbehältern (42), die oberhalb der oberen Öffnung gehaltert sind, wobei jeder dieser Behälter (42) so ausgestaltet ist, daß er einen Bestandteil mit gleichmäßigem Durchmesser speichern kann,
d) jeweils eine Überführungsleitung (50), die an jedem der Behälter bzw. Vorratsbehälter (42) getrennt befestigt ist, um die jeweiligen gespeicherten Bestandteile in den Zylinder (24) zu überführen, wobei ein unterer Abschnitt jeder Überführungsleitung (50) so ausgestaltet ist, daß er durch die obere Öffnung paßt und sich in den Zylinder (24) hinein erstreckt,
e) Düseneinrichtungen (56), die an der Überführungsleitung (50) unabhängig befestigt sind, um den Fluß des jeweiligen Bestandteiles durch die entsprechende Überführungsleitung (50) in den Zylinder (24) zu steuern,
f) Anhebe-/Absenkeinrichtungen (62, 64), um die Höhe der Überführungsleitung (50) bezüglich des Zylinders (24) zu verändern,
g) Ausrichteinrichtungen, um in vertikaler Richtung den Zylinder (24) bezüglich der vertikal bewegbaren Überführungsleitungen (50) auszurichten, und
h) Betätigungseinrichtungen (22), um den Zylinder um seine vertikale Achse zu drehen und um gleichzeitig untere Abschnitte der Überführungsleitungen (50) anzuheben, während außerdem die Bestandteile homogen aus den Vorratsbehältern (42), durch die Überführungsleitungen (50) und in den Zylinder (24) ausgegeben werden.

2. Vorrichtung nach Anspruch 1, einschließlich einer Vibrationseinrichtung (44), um die Vorratsbehälter (42) in Vibrationen zu versetzen, um die Überführung des Bestandteiles aus jedem der Vorratsbehälter (42) durch die entsprechende Überführungsleitung (50) und in den Zylinder (24) zu unterstützen.

3. Vorrichtung nach Anspruch 2, wobei die Anhebe-/Absenkeinrichtung (62, 64) eine vertikal bewegbare Platte (38) aufweist, welche die Überführungsleitungen (50) haltert, wobei die Höhe der Platte (38) und damit der Überführungsleitung (50) in Abhängigkeit von der Schichthöhe eingestellt wird, welche die in den Zylinder (24) gefüllten Bestandteile haben.

4. Vorrichtung nach Anspruch 3, wobei die Düseneinrichtung (56) unabhängige Strömungssteuereinrichtungen (80) haben, die einstellbar sind, um den Fluß eines der Bestandteile aus dem entsprechenden Vorratsbehälter (42) in den Zylinder (24) zu steuern.

5. Vorrichtung nach Anspruch 4, wobei die Düseneinrichtungen eine Stoppeinrichtung (74) aufweisen, um den Fluß der Bestandteile in den Zylinder zu blockieren.

6. Vorrichtung nach Anspruch 5, wobei die Stoppeinrichtung (74) normalerweise in Richtung einer geschlossenen Position vorgespannt ist, wobei die Betätigungseinrichtung die Vorspannung übersteigt, sobald der Fluß in den Zylinder gewünscht ist.

7. Vorrichtung nach Anspruch 6, wobei die Düseneinrichtungen (56) an einem Endbereich der jeweiligen Überführungsleitungen (50) befestigt sind, wobei die Düseneinrichtungen so ausgestaltet sind, daß sie sich in den Zylinder (24) erstrecken.

8. Vorrichtung nach Anspruch 7, wobei die Düseneinrichtungen (56) einen konvergierenden Strömungsweg (78) für die Bestandteile bilden und wobei die unabhängigen Strömungsregeleinrichtungen (80) in den konvergierenden Strömungsweg hinein vorspringen.

9. Vorrichtung nach Anspruch 8, wobei die Stoppvorrichtung eine gekrümmte Fläche (74) aufweist, die normalerweise unter Federkraft (68) geschlossen ist.

10. Vorrichtung nach Anspruch 9, wobei die gekrümmte Fläche (74) so ausgestaltet ist, daß sie die Bestandteile nach dem Zufallsprinzip zu einer homogenen Mischung ablenkt.

11. Vorrichtung nach Anspruch 10, wobei es drei Vorratsbehälter (42) und dementsprechend drei Überführungsleitungen (50) und drei Düsen (56) gibt.

12. Vorrichtung nach Anspruch 11, wobei der in vertikaler Richtung längliche Zylinder (24) ein Brennstab ist und wobei die Bestandteile kugelförmiges, radioaktives Pulver oder Granulate von in etwa gleichmäßigem Durchmesser sind, jedoch unterschiedliche Dichten haben.

## Revendications

1. Dispositif mélangeur et de chargement (10) pour charger de manière homogène des constituants de densités différentes comprenant:
a) un cylindre allongé verticalement (24) ayant une ouverture supérieure à travers laquelle les constituants doivent être chargés dans le cylindre (24);
b) une plaque tournante (20) soutenant le cylindre (24) et rotative pour faire tourner le cylindre autour de son axe vertical;
c) une pluralité de trémies (42) soutenus au-dessus de l'ouverture supérieure, chacun des trémies (42) étant configuré pour y emmagasiner un constituant de diamètre uniforme;
d) un conduit de transfert correspondant (50) fixé à chacun des trémies (42) pour transférer séparément le constituant correspondant emmagasiné au cylindre (24), une partie inférieure de chaque conduit de transfert (50) étant configurée pour s'adapter à travers l'ouverture supérieure et se prolonger dans le cylindre (24);
e) les moyens de tubulures (56) fixé au conduit de transfert (50) pour commander indépendamment l'écoulement du constituant correspondant à travers le conduit de transfert correspondant (50) dans le cylindre (24);
f) les moyens de levage et d'abaissement (62, 64) pour faire varier l'élévation du conduit de transfert (50) par rapport au cylindre (24);
g) le moyen d'alignement pour aligner verticalement le cylindre (24) par rapport au conduit de transfert mobile verticalement (50); et
h) le moyen de mise oeuvre (22) pour faire tourner le cylindre autour de son axe vertical et lever simultanément les parties inférieures des conduits de transfert (50) tout en déchargeant également de manière homogène les constituants des trémies (42) à travers les conduits de transfert (50) et dans le cylindre (24).

2. Dispositif selon la revendication 1, incluant le moyen vibrant (44) pour faire vibrer les trémies (42) pour faciliter le transfert du constituant de chacun des trémies (42) à travers le conduit de transfert correspondant (50) et dans le cylindre (24).

3. Dispositif selon la revendication 2, où les moyens de levage et d'abaissement (62, 64) comprennent une plate-forme mobile verticalement (38) soutenant les conduits de transfert (50), l'élévation de la plate-forme (38), et par conséquent du conduit de transfert (50), étant ajusté en fonction de la profondeur des constituants chargés dans le cylindre (24).

4. Dispositif selon la revendication 3, où les moyens de tubulures (56) comprennent les moyens de commande d'écoulement indépendant (30) pour commander de manière ajustée l'écoulement d'un des constituants d'un des trémies correspondant (42) dans le cylindre (24).

5. Dispositif selon la revendication 4, où les moyens de tubulures comprennent une butée (74) pour bloquer l'écoulement des constituants dans le cylindre.

6. Dispositif selon la revendication 5, où la butée (74) est normalement au repos en une position fermée avec le moyen de mise en oeuvre annulant la position de repos chaque fois que l'écoulement dans le cylindre est désiré.

7. Dispositif selon la revendication 6, où les moyens de tubulures (56) sont fixés à une région de l'extrémité du conduit de transfert correspondant (50) avec les moyens de tubulures configurés pour se prolonger dans le cylindre (24).

8. Dispositif selon la revendication 7, où les moyens de tubulures (56) comprennent un chemin d'écoulement convergeant (78) pour les constituants, et les moyens de commande de l'écoulement indépendant font saillie dans le chemin d'écoulement convergeant.

9. Dispositif selon la revendication 8, où la butée comprend une surface courbe (74) qui est normalement fermée sous la force du ressort (68).

10. Dispositif selon la revendication 9, où la surface courbe (74) est configurée pour dévier aléatoirement les constituants dans un mélange homogène.

11. Dispositif selon la revendication 10, où les trémies (42) sont au nombre de trois et de manière correspondante les conduits de transfert (50) et les tubulures (56) sont au nombre de trois.

12. Dispositif selon la revendication 11, où le cylindre allongé verticalement (24) est un barreau de combustible et les constituants sont de la poudre ou des granules radioactives sphériques de diamètre généralement uniforme mais ayant des différentes densités.
